# EUROPEAN PATENT SPECIFICATION

(11) **EP 0 711 252 B1**
(45) Date of publication and mention of the grant of the patent: **14.01.1998**
(21) Application number: 94922395.2
(22) Date of filing: 19.07.1994
(51) Int. Cl.: C01B 33/18, C04B 18/14, C01B 33/025, C22C 29/18

(54) **METHOD FOR PRODUCTION OF WHITE MICROSILICA**
VERFAHREN ZUR HERSTELLUNG WEISSER MIKROKIESELSÄURE
PROCEDE DE PRODUCTION DE LA MICROSILICE BLANCHE

(30) Priority: 27.07.1993 NO 932696
(43) Date of publication of application: 15.05.1996
(73) Proprietor: Elkem ASA, 0377 Oslo (NO)
(72) Inventor: DASTOL, Magne, N-4600 Kristiansand (NO); TVEIT, Halvard, N-7046 Trondheim (NO); DINGSOYR, Eldar, O., N-4640 Sogne (NO); RONNING, Per, N-7300 Orkanger (NO); HARSAKER, Svein, N-7300 Orkanger (NO)
(74) Representative: Rees, David Christopher
(86) International application number: NO9400128
(87) International publication number: WO9503995

(56) References cited:
- DE-A- 3 343 948

## Description

### Technical Field:

The present invention relates to a method for production of microsilica having a high light reflectivity or whiteness.

### Background Art:

Microsilica is normally produced as a by-product in the production of ferrosilicon and silicon in electric reduction furnaces where a charge comprising a SiO₂-source and one or more solid carbonaceous reduction agents are reacted to form ferrosilicon or silicon. In this process gasous SiO is formed as an intermediate product in the reaction zone in the furnace which gas moves upwards through the charge. A part of the SiO gas is condensed in the cooler charge above the reaction zone, while the remaining part of the SiO gas escapes from the charge and is oxidized by supply of air in the furnace above the charge and forms particulate amorphous SiO₂. The particulate SiO₂ is then recovered from the furnace off-gases in filters, normally baghouse filters. Microsilica produced in this way has a particle size substantially between 0.02 and 0.5 microns, and the individual particles are basically of spherical shape. Microsilica has during the last two decades found an increasing use as an additive material in concrete, refractory materials, ceramic materials, oil well cementing slurries, plastic materials, paper and others.

In production of ferrosilicon and silicon by the above mentioned method it is normally used a carbonaceous reduction material comprising a mixture of about 65 % by weight of coal, the remaining being coke and optionally wood chips. This is a mixture that has showed to give a best possible furnace operation as to productivity and yield of ferrosilicon and silicon.

Microsilica which are recovered by this method has a reflectivity between 30 and 50 measured by a method where black felt has a reflectivity of zero and where BaSO₄ has a reflectivity of 98.6. The produced microsilica thus has a relatively dark colour, which is a problem where microsilica is to be used for applications where a white product is needed. The reason why the microsilica has such a low reflectivity is mainly that the microsilica particles contain carbon in an amount of up to 3 % by weight.

Table 1 shows the chemical composition and some other properties for microsilica produced by the conventional method in a furnace for production of 75 % ferrosilicon.

**TABLE 1**

| Compound | % by weight |
|---|---|
| | |
| SiO₂ | 86 - 90 |
| SiC | 0.1- 0.4 |
| Fe₂O₃ | 0.3 - 0.9 |
| TiO | 0.02 - 0.06 |
| Al₂O₃ | 0.2 - 0.6 |
| MgO | 2.5 - 3.5 |
| CaO | 0.2 - 0.5 |
| Na₂O | 0.9 - 1.8 |
| K₂O | 2.5 - 3.5 |
| S | 0.2 - 0.4 |
| C | 0.8 - 2.0 |
| P | 0.03 - 0.08 |
| | |
| Ignition loss (1000°C) | 2.4 - 4.0 |
| Bulk density, from filter, g/l | 200 - 300 |
| Bulk density, compacted, g/l | 500 - 700 |
| Real density, g/cm³ | 2.20 - 2.25 |
| Specific surface m²/g | 18 - 22 |
| Primary particle size, percentage < 1µm | 90 |

The problem with microsilica having a low reflectivity has been tried solved in two ways. By one method microsilica produced as a by-product in electric smelting furnaces for production of ferrosilicon and silicon, is heat treated in a fluidized bed at temperatures of up to 900°C in order to combust the carbon contained in the microsilica. This method is described in Japanese patent publication No. 11559/84. According to another method, microsilica is produced in a so-called microsilica generator from a charge consisting of SiO₂ and Si. In this process a small part of silicon is produced in addition to microsilica. Both the two above described methods have disadvantages. Heat treatment of microsilica implies an additional step which is very costly and which is difficult to control. Without a strict control of tempeature and retention time, a part of the amorphous SiO₂ particles will be transferred to a crystalline state which will give a product with completely different properties. In addition, crystalline SiO₂ constitutes a health risk. Production of microsilica in a microsilica generator is very costly and it is difficult to design microsilica generators having a high capacity.

### Disclosure of Invention

Thus, there is a need to provide a method for producing microsilica whereby the disadvantages of the prior art methods are overcome.

Accordingly, the present invention relates to a method for producing microsilica having a reflectivity between 65 and 90 % in a smelting furnace for production of ferrosilicon or silicon by using a charge comprising an SiO₂-source and a solid carbonaceous reduction agent, where microsilica is recovered from the off-gases from the smelting furnace, wherein the solid reduction agent supplied to the furnace contains an amount of volatile matters of less than 1.25 kg per kg produced microsilica and that the temperature in the gas atmosphere in the furnace above the charge is kept above 500°C.

The amount of volatile matters in the solid reduction agent is preferably kept below 1.0 kg per kg produced microsilica, while the temperature in the gas atmosphere above the furnace charge preferably is maintained above 600°C. For best results the amount of volatile matters in the reducing agents is kept below 0.5 kg per kg produced microsilica.

It has surprisingly been found that by the method of the present invention one can produce microsilica having a very high reflectivity while at the same time the yield of ferrosilicon or silicon is not reduced. Microsilica having a very high reflectivity can thus, according to the present invention, be produced by changing the ratio between coke and coal in the reduction agent mixture and by keeping the temperature above the charge in the furnace above 500°C.

As coal has a substantially higher content of volatile matters than coke, one will in practice reduce the amount of coal and increase the amount of coke in the reduction agent mixture. According to a particularly preferred embodiment the reduction agent consist completely of coke.

By the present invention one has succeeded in producing microsilica having a whiteness of up to 90 while at the same time the other properties of the produced microsilica are not changed and the costs for production of microsilica are not substantially higher than in production of microsilica using a conventional reduction agent mixture.

### EXAMPLE 1

In a 43 MW electric smelting furnace of circular cross-section and equipped with three self-baking carbon electrodes, it was produced 75 % FeSi using a charge consisting of quartzite as SiO₂-source and 100 % coke as reduction agent. The coke had a content of volatile matter of 5.2 % by weight.

The charge was supplied to the furnace in an amount of 18.27 tons per hour and from the smelting furnace it was tapped 5.67 tons of 75 % FeSi per hour, while recovering from the furnace off-gases 0.81 tons of microsilica per hour. The temperature above the charge in the furnace was kept constant at 700°C. The power consumption per ton produced ferrosilicon was 7.7 MWh.

The ratio between the amount of volatile matter in the reduction agent and kg produced microsilica was 0.27.

Samples of the produced microsilica were drawn at intervals during the furnace operation and the whiteness or reflectivity was measured using a Zeiss Erephomet D145 apparatus. The results showed that the produced microsilica had a whiteness which varied between 80 and 84.

### EXAMPLE 2

In the same smelting furnace as used in example 1 it was produced 75 % FeSi using a charge consisting of quartzite as SiO₂-source and a reduction agent mixture consisting of 80 % by weight of coke having a content of volatile matter of 5.2 % by weight, and 20 % by weight of coal having a content of volatile matter of 33.8 % by weight.

The charge was added to the furnace in an amount of 16.32 tons per hour and from the smelting furnace it was tapped 5.40 tons 75 % FeSi per hour, while 0.56 tons per hour of microsilica was recovered from the furnace off-gases. The temperature in the furnace gas atmosphere above the charge was kept constant at 700°C.

The power consumption per ton produced ferrosilicon was 7.5 MWh. The ratio between the amount of volatile matter in the reduction agents and kg produced microsilica was 1.00.

Samples of the produced microsilica were drawn at intervals during the furnace operation and the reflectivity was measured in the same way as described in example 1. The results showed that the produced microsilica had a reflectivity between 67 and 76.

### EXAMPLE 3 (Comparison)

For comparison purposes the furnace was operated using a conventional reduction agent mixture consisting of 65 % by weight of coal and 35 % by weight of coke. The ratio between volatile matter in the reduction agent mixture and the amount of produced microsilica was 1.90. The temperature in the furnace above the charge was also in this example kept at 700°C. The production of 75 % FeSi per hour was the same as in examples 1 and 2 and the power consumption per ton produced ferrosilicon was 7.7 MWh.

Samples of the produced microsilica were drawn at intervals and the reflectivity was measured. The results showed a reflectivity of 40.

A comparison of the results in examples 1 and 2 and the results in example 3 shows that by the method of the present invention a substantial increase in whiteness of the produced microsilica is achieved while at the same time the power consumption and the yield of FeSi are not effected. This is very surprising as the production of microsilica having a high reflectivity always has been associated with a reduced yield of FeSi and an increased power consumption per ton of produced ferrosilicon.

## Claims

1. Method for producing microsilica having a reflectivity between 65 and 90 % in a smelting furnace for production of ferrosilicon or silicon by using a charge comprising an SiO₂-source and a solid carbonaceous reduction agent, where microsilica is recovered from the off-gases from the smelting furnace, **characterized in** that the solid reduction agent supplied to the furnace contains an amount of volatile matters of less than 1.25 kg per kg produced microsilica and that the temperature in the gas atmosphere in the furnace above the charge is kept above 500°C.

2. Method according to claim 1, **characterized in** that the amount of volatile matters in the solid reduction agent is kept below 1.0 kg per kg produced microsilica.

3. Method according to claim 1, **characterized in** that the temperature in the gas atmosphere above the furnace charge is maintained above 600°C.

4. Method according to claim 1 or 2, **characterized in** that the reduction agent is coke.

## Patentansprüche

1. Verfahren zur Produktion von Mikrosiliciumdioxid mit einem Reflektionsgrad zwischen 65 und 90 in einem Schmelzofen für die Produktion von Ferrosilicium oder Silicium, unter Verwendung einer SiO₂-Quelle und eines, festen Kohlenstoff enthaltenden Reduktionsmittels, wobei Mikrosiliciumdioxid aus den Abgasen des Schmelzofens isoliert wird, dadurch gekennzeichnet, daß der Gehalt des festen Reduktionsmittels, das dem Ofen zugeführt wird, an flüchtigen Bestandteilen weniger als 1,25 kg/kg produziertes Mikrosiliciumdioxid beträgt und daß die Temperatur in der Gasatmosphäre in dem Ofen oberhalb der Charge auf mehr als 500°C gehalten wird.

2. Verfahren nach Anspruch 1, dadurch gekennzeichnet, daß die Menge an flüchtigen Bestandteilen in dem festen Reduktionsmittel auf einem Wert unterhalb von 1,0 kg/kg produziertes Mikrosiliciumdioxid gehalten wird.

3. Verfahren nach Anspruch 1, dadurch gekennzeichnet, daß die Temperatur der Gasatmosphäre oberhalb der Beschickung des Ofens auf mehr als 600°C gehalten wird.

4. Verfahren nach Anspruch 1, dadurch gekennzeichnet, daß als Reduktionsmittel Koks verwendet wird.

## Revendications

1. Procédé de production de microsilice ayant une réflectivité comprise entre 65 et 90 % dans un four de fusion pour la production de ferrosilicium ou de silicium en employant une charge comprenant une source de SiO₂ et un agent de réduction carboné solide, où la microsilice est récupérée des gaz qui s'échappent provenant du four de fusion,
caractérisé en ce que
l'agent de réduction solide fourni au four contient une quantité de produits volatils de moins de 1,25 kg par kg de microsilice produite et en ce que la température dans l'atmosphère gazeuse dans le four au-dessus de la charge, est maintenue au-dessus de 500°C.

2. Procédé selon la revendication 1,
caractérisé en ce que
la quantité de produits volatils dans l'agent de réduction solide est maintenue en dessous de 1,0 kg par kg de microsilice produite.

3. Procédé selon la revendication 1,
caractérisé en ce que
la température dans l'atmosphère gazeuse au-dessus de la charge du four est maintenue au-dessus de 600°C.

4. Procédé selon la revendication 1 ou la revendication 2,
caractérisé en ce que
l'agent de réduction est du coke.
